# EUROPÄISCHE PATENTANMELDUNG

(11) **EP 2 407 309 A2**
(43) Veröffentlichungstag der Anmeldung: **18.01.2012**
(21) Anmeldenummer: 11172423.3
(22) Anmeldetag: 01.07.2011
(51) Int. Cl.: B41F 33/00

(54) **Vorrichtung zur Überwachung des Druckergebnisses bei Rotationsdruckmaschinen**

(30) Priorität: 15.07.2010 DE 202010008084 U
(71) Anmelder: eltromat GmbH, 33818 Leopoldshöhe (DE)
(72) Erfinder: Koltermann, Oliver, 32130 Enger (DE); Volkening, Dirk, 32469 Petershagen (DE)
(74) Vertreter: TER MEER - STEINMEISTER & PARTNER GbR

(57) **Zusammenfassung**

Vorrichtung zur Überwachung des Druckergebnisses bei Rotationsdruckmaschinen, mit:
- einem Bahnbeobachtungssystem mit einer Matrixkamera (20), die in Querrichtung über eine in der Druckmaschine bedruckte Bahn (10) bewegbar ist und dazu ausgebildet ist, bei laufender Produktion, synchron mit dem Repeat des Druckbildes einen Ausschnitt des Druckbildes aufzunehmen, und
- einem Inspektionssystem zur lückenlosen Inspektion des Druckbildes, mit einer Zeilenkamera (14), die sich über die gesamte Breite der Bahn (10) erstreckt,

gekennzeichnet durch ein integriertes Steuerpult (18) für das Bahnbeobachtungssystem und das Inspektionssystem.

## Beschreibung

Die Erfindung betrifft eine Vorrichtung zur Überwachung des Druckergebnisses bei Rotationsdruckmaschinen, mit:
- einem Bahnbeobachtungssytsem mit einer Matrixkamera, die in Querrichtung über eine in der Druckmaschine bedruckte Bahn bewegbar ist und dazu ausgebildet ist, bei laufender Produktion, synchron mit dem Repeat des Druckbildes einen Ausschnitt des Druckbildes aufzunehmen, und
- einem Inspektionssystem zur lückenlosen Inspektion des Druckbildes, mit einer Zeilenkamera, die sich über die gesamte Breite der Bahn erstreckt.

Für die Druckindustrie sind Bahnbeobachtungssysteme bekannt, mit denen bei laufender Produktion ein ausgewählter Ausschnitt des auf die Bahn gedruckten Bildes beobachtet werden kann. Durch die Synchronisation der Matrixkamera mit dem Repeat des Druckbildes wird erreicht, dass dem Maschinenführer auf einem Monitor ein stehendes Bild angezeigt werden kann, das den gewählten Ausschnitt des Druckbildes wiedergibt. Wenn sich bei der Beobachtung dieses Ausschnittes zeigt, dass das Druckbild gewisse Fehler aufweist, beispielsweise Passerfehler, so kann der Maschinenführer die entsprechenden Einstellungen der Druckmaschine, beispielsweise das Seitenregister oder das Längsregister einzelner Farbwerke nachjustieren, um diese Fehler zu korrigieren. In entsprechender Weise können zur Behebung anderer Arten von Fehlern auch andere Einstellparameter der Druckmaschine nachjustiert werden, beispielsweise die Druckbeistellung (die Kraft, mit der die Klischeewalze gegen den Bedruckstoff angedrückt wird). Zu dem Bahnbeobachtungssystem gehört ein Steuerpult mit mindestens einem Monitor und Bedienelementen für die Steuerung der Matrixkamera und für die gegebenenfalls in der Druckmaschine vorzunehmenden Einstelloperationen.

Typischerweise ist die Matrixkamera zoomfähig, so dass fehlerhafte oder problematische Bereiche des Druckbildes mit hoher Auflösung begutachtet werden können.

Mit der Matrixkamera lässt sich allerdings nur ein relativ kleiner Bruchteil der Gesamtfläche der bedruckten Bahn beobachten, typischerweise ein Anteil in der Größenordnung von etwa 1%. Ein herkömmliches Bahnbeobachtungssystem ist deshalb nicht in der Lage, jeden in dem Druckerzeugnis auftretenden Fehler zuverlässig zu erkennen.

Für eine lückenlose Inspektion des Druckerzeugnisses sind spezielle Inspektionssysteme entwickelt worden, mit denen ein vollständiges Bild der gedruckten Bahn aufgenommen und digital gespeichert wird. Die Bildinformation wird dabei mit Positionsinformation verknüpft, die den Ort des jeweiligen Bildbereiches in Längsrichtung der Bahn angibt. Ein Steuerpult mit einem Monitor erlaubt es, für jeden gewünschten Punkt auf der bedruckten Bahn das zugehörige Bild aufzurufen und auf Fehler zu inspizieren. Wenn nicht tolerierbare Fehler im gedruckten Bild festgestellt werden, so ist es anhand der gespeicherten Positionsinformation möglich, nach Abschluss des Druckprozesses mit Hilfe eines Umrollers den schadhaften Bereich der bedruckten Bahn anzufahren und aus der Bahn herauszutrennen.

Es sind auch Fehlererkennungsalgorithmen für eine automatische Fehlererkennung entwickelt worden. Dazu werden beispielsweise zu Beginn des Druckprozesses die ersten etwa 50 sich wiederholenden Druckbilder (Formate) mit einer Zeilenkamera digital fotografiert, und die Bildinformation wird über die 50 Bilder integriert, so dass man ein Referenzbild, das sogenannte "Golden Image" erhält, mit dem dann die später während des Druckprozesses aufgenommenen Bilder verglichen werden. In der Integrationsphase lässt sich auch die Schwankungsbreite der Bildinformation für jedes einzelne Pixel bestimmen, so dass sich Toleranzgrenzen für die Fehlererkennung festlegen lassen. Während des Druckprozesses wird dann das aktuell aufgenommene Bild vom Referenzbild subtrahiert, und wenn die erhaltene Differenz außerhalb der Fehlertoleranzen liegt, so wird ein Fehlersignal erzeugt, und der fehlerhafte Bildbereich wird auf dem Monitor des Steuerpultes dargestellt. Das erlaubt es dem Bedienungspersonal, schon während des Druckprozesses einzugreifen, um den Fehler zu beheben, oder, wenn er nicht behebbar ist, den Druckprozess abzubrechen. Darüber hinaus können die Positionen der erkannten Bildfehler gespeichert werden, so dass die schadhaften Stellen in der bedruckten Bahn nach Abschluss des Druckprozesses gezielt untersucht und gegebenenfalls entfernt werden können. Die letzte Entscheidung, ob ein fehlerhafter Bildbereich entfernt werden muss oder noch toleriert werden kann, liegt jedoch nach wie vor beim Bedienungspersonal.

Auch wenn Bahnbeobachtungssysteme und Inspektionssysteme gleichzeitig an derselben Druckmaschine eingesetzt werden, handelt es sich bisher generell um getrennte, voneinander unabhängige Systeme.

Es sind allerdings auch Inspektionssysteme bekannt, die eine hochauflösende digitale Zeilenkamera aufweisen, deren Bildsignal auch für eine Bahnbeobachtung genutzt werden kann. Diese Zeilenkamera ermöglicht jedoch keinen optischen Zoom, so dass der Auflösung gewisse Grenzen gesetzt sind und problematische Bildbereiche oft nicht mit der gewünschten Genauigkeit begutachtet werden können.

Für ein Inspektionssystem mit automatischer Fehlererkennung ist auch bereits eine Schnittstelle zum Bahnbeobachtungssystem entwickelt worden, die es erlaubt, den Maschinenführer am Steuerpult des Bahnbeobachtungssystems auf Fehler hinzuweisen, die vom Inspektionssystem erkannt wurden.

Aufgabe der Erfindung ist es, eine Vorrichtung zur Überwachung des Druckergebnisses zu schaffen, die sich durch einen vereinfachten Aufbau und erhöhten Bedienungskomfort auszeichnet.

Diese Aufgabe wird erfindungsgemäß gelöst durch ein integriertes Steuerpult für das Bahnbeobachtungssystem und das Inspektionssystem.

Erfindungsgemäß werden somit die Funktionen, die bisher von zwei getrennten Steuerpulten erfüllt wurden, von einem einzigen integrierten Steuerpult übernommen, so dass der Installationsaufwand und der Platzbedarf reduziert werden und Synergien zwischen den beiden Systemen effizienter genutzt werden können. Insbesondere brauchen Betriebsparameter, die für beide Systeme relevant sind, beispielsweise die Bahnbreite und der Repeat für den jeweiligen Drucklauf, nur noch einmal eingegeben zu werden.

Für die Wiedergabe des von der Matrixkamera des Bahnbeobachtungssystems aufgenommenen Bildes und des vom Inspektionssystem aufgenommenen Bildes genügt im Prinzip ein einziger großformatiger Bildschirm mit hoher Auflösung, auf dem bei Bedarf auch beide Bilder in Split-Screen-Technik oder als "Bild-im-Bild" dargestellt werden können. Der Maschinenführer hat die Wahl, ob er die Bahnbeobachtung mit der Zeilenkamera oder mit der Matrixkamera ausführen will. Insbesondere besteht die vorteilhafte Möglichkeit, die Matrixkamera so zu positionieren, dass sie einen besonders problematischen Bildbereich erfasst, beispielsweise einen Bar-Code beim Drucken von Verpackungsmaterial, während mit der Zeilenkamera der für die Bahnbeobachtung ausgewählte Bereich flexibel gewählt werden kann. Das erlaubt es, bei der Bahnbeobachtung ohne Zeitverlust zwischen zwei verschiedenen Bildbereichen umzuschalten, um so die Qualität der Beobachtung zu verbessern.

Vorteilhafte Ausgestaltungen der Erfindung sind in den Unteransprüchen angegeben.

In einer besonders vorteilhaften Ausfiihrungsform weist das Steuerpult einen berührungsempfindlichen Bildschirm (Touch Screen) auf. Die Bedienelemente für das Bahnbeobachtungssystem und das Inspektionssystem werden dann durch Soft-Keys auf dem Bildschirm gebildet, und die Auswahl und Anordnung dieser Bedienungselemente kann flexibel an die jeweils auszuführende Funktion angepasst werden.

Im folgenden wird ein Ausführungsbeispiel anhand der Zeichnung näher erläutert.

Es zeigen:
- Fig. 1: eine schematische perspektivische Ansicht einer erfindungsgemäßen Vorrichtung; und
- Fig. 2 und 3: Beispiele für Bildschirmbilder auf einem Monitor eines Steuerpultes der Vorrichtung nach Fig. 1.

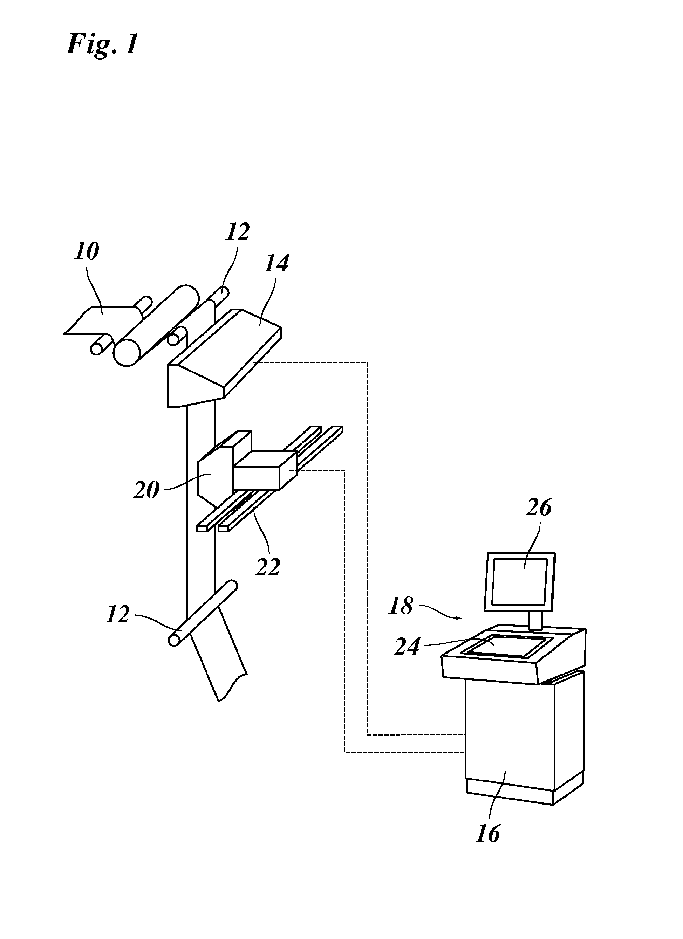

In Fig. 1 ist ein Abschnitt einer Bahn 10 gezeigt, die in einer Rotationsdruckmaschine bedruckt worden ist und über verschiedene Umlenk- und Führungsrollen 12 zu einer nicht gezeigten Aufwicklung weitergeleitet wird. An der Bahn 10 ist auf der bedruckten Seite eine digitale Zeilenkamera 14 angeordnet, die sich quer zur Bahn 10 über deren gesamte Breite erstreckt und in der Lage ist, zu jedem Zeitpunkt ein komplettes Farbbild einer Zeile des auf die Bahn 10 gedruckten Bildes aufzunehmen.

Die Zeilenkamera 14 ist mit einem leistungsfähigen elektronischen Datenverarbeitungssystem 16 in einem Steuerpult 18 der Vorrichtung verbunden. In dem Datenverarbeitungssystem 16 werden die von der Zeilenkamera 14 gelieferten digitalen Bilddaten Zeile für Zeile gespeichert, so dass sich im Laufe des Druckprozesses ein komplettes Bild der bedruckten Bahn 10 aufnehmen lässt. Dabei erhält das Datenverarbeitungssystem 16 auch Informationen von der Steuereinrichtung der Druckmaschine, insbesondere Information über den Bahntransport, die es erlaubt, jedem Bereich des aufgenommenen und gespeicherten Bildes die zugehörige Längsposition auf der Bahn 10 zuzuordnen. Darüber hinaus enthält das Datenverarbeitungssystem 16 ein leistungsfähiges Bildverarbeitungssystem und Software für eine automatische Fehlererkennung.

Beleuchtungssysteme (Hell- und Dunkelfeldbeleuchtung) zur Ausleuchtung der von der Zeilenkamera 14 aufgenommenen Bildzeile auf der Bahn 10 sind in die Zeilenkamera 14 integriert. Wahlweise kann eine Beleuchtungseinrichtung, beispielsweise eine LED-Zeile auch gegenüberliegend zu der Zeilenkamera 14 auf der Rückseite der Bahn 10 angeordnet sein, so dass es möglich ist, transparente Bahnen auch im Durchlicht aufzunehmen.

An der Bahn 10 ist außerdem eine Matrixkamera 20 installiert, die dazu eingerichtet ist, einen rechteckigen Ausschnitt des auf die Bahn 10 gedruckten Bildes zu fotografieren. Auch hier sind zugehörige Beleuchtungseinrichtungen direkt in die Kamera integriert.

Die Bahn 10 wird in der Rotationsdruckmaschine mit einem Bild bedruckt, das sich in gewissen Intervallen (dem Repeat) wiederholt, nämlich mindestens nach jeder vollständigen Umdrehung der Druckwalzen. Die Matrixkamera 20 ist nach den Stroboskop-Prinzip so mit im Repeat synchronisiert, das bei jedem digitalen Einzelfoto, das die Matrixkamera aufnimmt, derselbe Bildausschnitt fotografiert wird, so dass man auf einem Bildschirm, auf dem die nacheinander aufgenommenen Bilder wiedergegeben werden, ein stehendes Bild erhält.

Die Matrixkamera 20 ist auf Schienen 22 in Querrichtung der Bahn 10 verfahrbar, so dass die Querposition des fotografierten Bildausschnittes variiert werden kann. Durch Änderung der Phasenlage der Bildfrequenz relativ zum Repeat lässt sich auch die Längsposition des Bildausschnittes variieren. Weiterhin weist die Matrixkamera 20 einen optischen Zoom auf, der es erlaubt, näher an die Bahn 10 heranzuzoomen, so dass ein kleinerer Bildausschnitt mit entsprechend höherer Auflösung beobachtet werden kann.

Die Matrixkamera 20 ist Kernstück eines Bahnbeobachtungssystems, das dazu dient, das Ergebnis des Druckprozesses bei laufender Produktion stichprobenartig zu überwachen, so dass der Maschinenführer jederzeit eingreifen kann, um etwa auftretende Fehler wie Passerfehler, Farbtonveränderungen und dergleichen zu korrigieren.

Die Zeilenkamera 14 ist dagegen das Kernstück eines Inspektionssystems, das dazu dient, die bedruckte Bahn 10 in ihrer Gesamtheit auf etwaige Fehler im Druckbild zu inspizieren, so dass in einem späteren Schritt schadhafte Bereiche aus der Bahn herausgetrennt werden können.

Bei der hier gezeigten Vorrichtung ist das Steuerpult 18 ein integriertes Steuerpult, das dazu eingerichtet ist, sowohl das Inspektionssystem (Zeilenkamera 14) als auch das Bahnbeobachtungssystem (Matrixkamera 20) zu steuern und die von diesen Systemen gelieferten Daten elektronisch auszuwerten und dem Bedienungspersonal zu präsentieren. Zu diesem Zweck weist das Steuerpult 18 einen berührungsempfmdlichen Bildschirm 24 auf, auf dem wahlweise ein von der Zeilenkamera 14 erzeugtes Bild, ein von der Matrixkamera 20 erzeugtes Bild oder Kombinationen solcher Bilder dargestellt werden können, zusammen mit Darstellungen von Tasten für Bedienungsoperationen. Im gezeigten Beispiel ist auf dem Steuerpult noch ein zusätzlicher Monitor 26 angebracht.

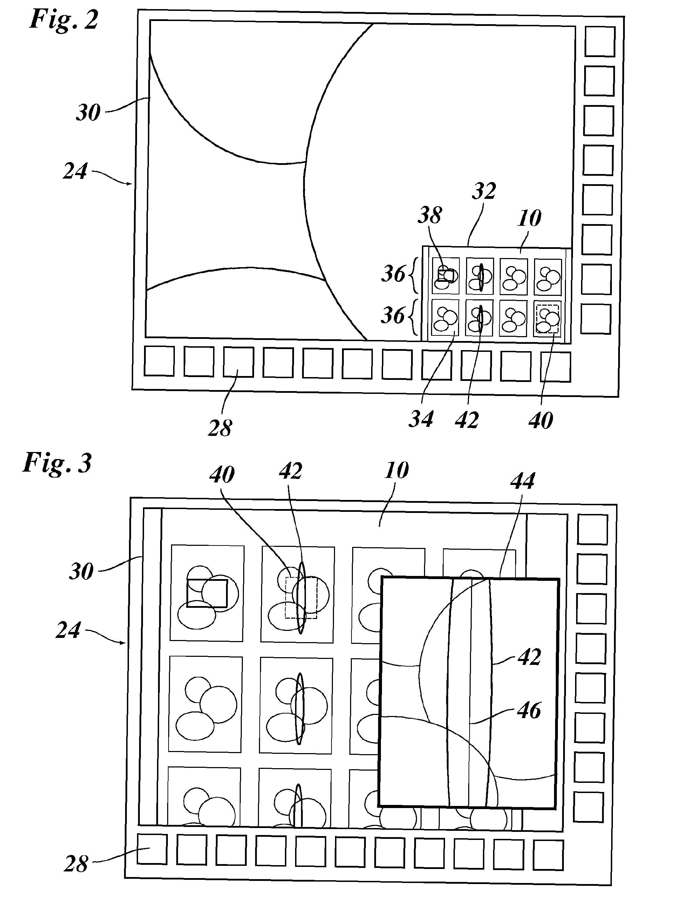

Fig. 2 zeigt ein Beispiel für ein auf dem Bildschirm 24 dargestelltes Anzeigebild. Am unteren Rand und am rechten Rand des Bildschirms sind Tastenfelder 28 (Soft-Keys) für die jeweils benötigten Bedienungsoperationen dargestellt, beispielsweise für die Wahl des Bildwiedergabemodus, für die Positionierung der Matrixkamera 22, und dergleichen. Die Inhalte und Ort der Tastenfelder können je nach Funktion und Betriebszustand dynamisch variieren. Wahlweise können auch Tasten für die Einstellung des Längs- und Seitenregisters, für die Druckbeistellung, etc. der Druckmaschine vorgesehen sein.

In einem Bildfenster 30 wird im gezeigten Beispiel ein Bildausschnitt angezeigt, der für die Bahnbeobachtung ausgewählt wurde. In der rechten unteren Ecke des Bildfensters 30 ist ein kleineres Bild 32 eingeblendet, das einen Abschnitt der Bahn 10, wie er aktuell von der Zeilenkamera 14 aufgenommen wird, in voller Breite wiedergibt. Das auf die Bahn 10 aufgedruckte Bild besteht im gezeigten Beispiel aus vier über die Breite der Bahn verteilte Nutzen 34 mit identischem Bildinhalt. Im gezeigten Beispiel hat der in dem Bild 32 wiedergegebene Bahnabschnitt eine Länge von 2 Formaten 36 (ein Format ist das sich wiederholende Bild, das bei jeder Umdrehung der Druckzylinder gedruckt wird).

Ein Rahmen 38 in dem Bild 32 gibt die Lage und Größe des Bildausschnittes an, der derzeit für die Bahnbeobachtung verwendet und im Hauptteil des Bildfensters 30 angezeigt wird. Für die Bahnbeobachtung kann je nach Anwendungszweck entweder die Zeilenkamera 14 oder die Matrixkamera 20 eingesetzt werden. Die Verwendung der Zeilenkamera 14 hat den Vorteil, dass die Lage des Bildausschnittes schnell verändert werden kann, da dazu keine Kameraelemente mechanisch bewegt werden müssen, sondern lediglich der Bereich des aufgenommenen Bildes elektronisch ausgewählt zu werden braucht. Zwar verfügt die Zeilenkamera 14 auch über einen digitalen Zoom, der es erlaubt, den ausgewählten Bildausschnitt vergrößert darzustellen, doch ist es Auflösungsvermögen begrenzt, da kein optischer Zoom zur Verfügung steht.

Wenn bestimmte Bereiche des Bildes mit höchster Auflösung begutachtet werden sollen, empfiehlt sich daher der Einsatz der Matrixkamera 20, die es mit ihrem optischen Zoom erlaubt, sehr nahe an den gewünschten Bereich heranzuzoomen.

In dem in Fig. 2 gezeigten Beispiel wird die Zeilenkamera 14 für die Bahnbeobachtung verwendet. Die Matrixkamera 20 ist jedoch einsatzbereit, und der Bildausschnitt, der im aktuellen Zustand der Matrixkamera 20 (mit geringer Zoomstufe) aufgenommen würde, ist in dem kleinen Bild 32 durch einen Rahmen 40 angegeben.

Wenn das Druckformat beispielsweise zwei besonders kritische Bereiche aufweist, denen bei der Bahnbeobachtung besondere Beachtung geschenkt werden sollte, so besteht die Möglichkeit, den von der Zeilenkamera 14 beobachteten Bildausschnitt (Rahmen 38) auf einen dieser Bereiche auszurichten und den von der Matrixkamera 20 beobachteten Bildausschnitt (Rahmen 40) auf den anderen, so dass bei der Bahnbeobachtung schnell zwischen den beiden Ausschnitten umgeschaltet werden kann, ohne dass dazu mechanische Komponenten bewegt werden müssen. Ebenso ist es möglich, mehrere Bildausschnitte simultan wiederzugeben.

Wenn der Maschinenführer bei der Bahnbeobachtung mit der Zeilenkamera 14 in dem Bild, das im Hauptteil des Bildfensters 30 wiedergegeben wird, eine lokale Unregelmä-Bigkeit entdeckt, die er gerne mit höherer Auflösung untersuchen möchte, so kann er jederzeit die Matrixkamera 20 auf diese Stelle richten und die Unregelmäßigkeit mit sehr hoher Auflösung untersuchen. Die von der Matrixkamera anzufahrende Position kann dabei einfach durch antippen der interessierenden Stelle auf dem Bildschirm angegeben werden.

Andererseits besteht auch die Möglichkeit, die Matrixkamera 20 für Spezialaufgaben zu verwenden, beispielsweise für eine automatische Qualitätsüberwachung von feststehenden Motiven im Druckbild, für die eine besonders hohe Qualität verlangt wird, beispielsweise für Firmenlogos oder Bar-Codes auf Verpackungen.

Wenn, wie in dem in Fig. 2 gezeigten Beispiel, die Bahnbeobachtung mit Hilfe der Zeilenkamera 14 erfolgt, so wird der von dieser Zeilenkamera gelieferte Datenstrom automatisch in zwei Teilströme aufgeteilt. Einer dieser Teilströme betrifft den für die Bahnbeobachtung ausgewählten Bildausschnitt und wird im Bildfenster 30 wiedergegeben, während der andere Teilstrom die Bildinformation für die gesamte Breite der Bahn 10 umfasst und zusammen mit der entsprechenden Positionsinformation gespeichert wird.

Während des Druckbetriebs läuft im Datenverarbeitungssystem 16 parallel zu der Bildwiedergabe für die Bahnbeobachtung im Hintergrund eine automatische Fehlererkennung auf der Grundlage der von der Zeilenkamera 14 gelieferten Daten. Wenn sich in einem bestimmten Bereich des auf die Bahn 10 gedruckten Bildes eine Abweichung des aktuell aufgenommenen Bildes von dem in einer Lernphase am Anfang des Drucklaufes aufgenommenen Referenzbild ergibt und die Abweichungen außerhalb bestimmter Toleranzgrenzen liegen, so wird das Bedienungspersonal schon während des Drucklaufes auf diesen Fehler aufmerksam gemacht, beispielsweise durch ein akustisches Signal und durch Anzeige des fehlerhaften Bildbereiches auf dem Bildschirm 24. Um den Aufmerksamkeitswert zu erhöhen, kann ein vergrößertes Bild des fehlerhaften Bereiches animiert in das Bildfenster 30 eingeblendet werden.

In dem in Fig. 2 gezeigten Beispiel hat der Maschinenführer einen Betriebsmodus gewählt, in dem die automatisch erkannten Fehler lediglich durch geeignete Markierungen 42 in dem kleinen Bild 32 kenntlich gemacht werden. Wenn der Maschinenführer die laufende Bahnbeobachtung unterbrechen möchte, um den durch die Markierung 42 angezeigten Fehler näher zu inspizieren, braucht er lediglich mit dem Finger die entsprechende Markierung auf dem berührungsempfindlichen Bildschirm 24 anzutippen, und er erhält ein vergrößertes Bild des fehlerhaften Bereiches im Bildfenster 30. Wenn eine besonders hohe Zoomstufe gewünscht ist, kann dieses Detailbild auch von der Matrixkamera 20 erzeugt werden, die dazu automatisch die betreffende Position anfährt.

Fig. 3 illustriert eine Situation, in der der Benutzer einen Wiedergabemodus gewählt hat, in dem der Abschnitt der Bahn 10, der in Fig. 2 in dem kleinen Bild 32 angezeigt wurde, nun als Vollbild im Bildfenster 30 angezeigt wird und in dem zusätzlich als "Bild im Bild" 44 der von der Markierung 42 gekennzeichnete Bereich in starker Vergrößerung wiedergegeben wird. Im gezeigten Beispiel wird dazu die Matrixkamera 20 verwendet, die durch den Rahmen 40 im Hauptbild angezeigt wird. Bei dieser Vergrö-Berung erkennt der Maschinenführer, dass es sich bei dem automatisch erkannten Fehler in dem gezeigten Beispiel um einen Rakelstreifen 46 handelt. Er kann nun versuchen, diesen Fehler durch geeignete Gegenmaßnahmen zu beheben, beispielsweise durch eine Querverstellung oder Vibration der Rakel, und er kann das Ergebnis am Bildschirm 24 verfolgen. Falls sich der Rakelstreifen 46 nicht beseitigen lässt, kann er entscheiden, den Druckvorgang abzubrechen, um das Rakelmesser zu reinigen.

An diesem Beispiel erweist sich der besondere Vorteil der Integration von Bahnbeobachtung und Inspektion in einem gemeinsamen Steuerpult in Verbindung mit einer automatischen Fehlererkennung im Inspektionssystem. Fehler, die bei der regulären Bahnbeobachtung unerkannt blieben, können vom Inspektionssystem erkannt und frühzeitig gemeldet werden, so dass Gegenmaßnahmen eingeleitet werden können, bevor größere Mengen an Makulatur produziert werden. Die flexiblen Möglichkeiten zur Bildwiedergabe erleichtern es dem Benutzer dabei, den Fehler genauer zu identifizieren und zu klassifizieren, so dass Gegenmaßnahmen gezielt eingeleitet werden können.

Vorzugsweise werden im Datenverarbeitungssystem 16 auch die bei der automatischen Fehlererkennung erkannten Fehler protokolliert und als Fehlerbilder gespeichert, so dass die Fehler nach Abschluss des Drucklaufes am Steuerpult 18 gezielt inspiziert werden können. Gegebenenfalls kann vom Steuerpult 18 auch der Umroller angesteuert werden, mit dem die schadhaften Bereiche, die aus der Bahn 10 herauszutrennen sind, in eine entsprechende Position auf einem Schneidetisch gebracht werden.

## Patentansprüche

1. Vorrichtung zur Überwachung des Druckergebnisses bei Rotationsdruckmaschinen, mit:
- einem Bahnbeobachtungssystem mit einer Matrixkamera (20), die in Querrichtung über eine in der Druckmaschine bedruckte Bahn (10) bewegbar ist und dazu ausgebildet ist, bei laufender Produktion, synchron mit dem Repeat des Druckbildes einen Ausschnitt des Druckbildes aufzunehmen, und
- einem Inspektionssystem zur lückenlosen Inspektion des Druckbildes, mit einer Zeilenkamera (14), die sich über die gesamte Breite der Bahn (10) erstreckt,
**gekennzeichnet durch** ein integriertes Steuerpult (18) für das Bahnbeobachtungssystem und das Inspektionssystem.

2. Vorrichtung nach Anspruch 1, bei der das Steuerpult (18) einen berührungsempfindlichen Bildschirm (24) zur wahlweisen Anzeige eines von der Matrixkamera (20) und/oder der Zeilenkamera (14) gelieferten Bildes und zur Eingabe von Bedienbefehlen aufweist.

3. Vorrichtung nach Anspruch 1 oder 2, bei der die Matrixkamera (20) einen optischen Zoom aufweist.

4. Vorrichtung nach einem der vorstehenden Ansprüche, mit einem Datenverarbeitungssystem (16), das dazu ausgebildet ist, durch Analyse des mit der Zeilenkamera (14) aufgenommenen Bildes automatisch Fehler in dem auf die Bahn (10) gedruckten Bild zu erkennen und die Fehler auf einem Bildschirm (24, 26) des Steuerpultes (18) visuell darzustellen.

5. Vorrichtung nach den Ansprüchen 3 und 4, bei der das Datenverarbeitungssystem (16) dazu eingerichtet ist, fehlerhafte Bildbereiche auf dem berührungsempfindlichen Bildschirm (24) durch eine Markierung (42) zu kennzeichnen und eine Berührung dieser Markierung (42) durch den Benutzer als Befehl zu interpretieren, den betreffenden Bildbereich vergrößert wiederzugeben.

6. Vorrichtung nach Anspruch 4 oder 5, bei der das Datenverarbeitungssystem (16) dazu eingerichtet ist, bei automatischer Erkennung eines Fehlers die Matrixkamera (20) automatisch auf eine Position für eine nähere Untersuchung dieses Fehlers einzustellen.
